# EUROPÄISCHE PATENTSCHRIFT

(11) **EP 1 104 376 B1**
(45) Veröffentlichungstag und Bekanntmachung des Hinweises auf die Patenterteilung: **10.12.2003**
(21) Anmeldenummer: 00949132.5
(22) Anmeldetag: 21.06.2000
(51) Int. Cl.: B62B 3/10, B62B 3/14

(54) **STAPELBARER TRANSPORTWAGEN**
STACKABLE TRANSPORT CART
CHARIOT TRANSPORTEUR EMPILABLE

(30) Priorität: 23.06.1999 DE 29910923 U; 20.10.1999 DE 29918506 U
(43) Veröffentlichungstag der Anmeldung: 06.06.2001
(73) Patentinhaber: WANZL METALLWARENFABRIK GMBH, D-89336 Leipheim (DE)
(72) Erfinder: SCHMID, Johann, D-87757 Derndorf (DE); EBERLEIN, Herbert, D-89347 Bubesheim (DE); WAGNER, Christian, D-86850 Fischach (DE)
(86) Internationale Anmeldenummer: DE0002080
(87) Internationale Veröffentlichungsnummer: WO01000475

(56) Entgegenhaltungen:
- US-A- 3 224 787
- US-A- 4 679 805

## Beschreibung

Die Erfindung betrifft einen stapelbaren Transportwagen zum Transport von Platten in hochkant abgestellter Lage, mit einem von oben betrachtet trapezförmigen Fahrgestell, dessen längere parallele Seite fehlt, mit einem Querrahmen, der parallel zur kürzeren parallelen Seite des Fahrgestelles angeordnet ist und die seitlichen Holme des Fahrgestelles verbindet, mit einer am Fahrgestell angeordneten Auflageanordnung zum Abstellen der Platten und mit einer vom Fahrgestell getragenen, schräg nach oben gerichteten, zwei Schenkel und einen horizontalen Rahmenabschnitt aufweisenden Stützeinrichtung zum Anlehnen der Platten, wobei sich die abgestellten Platten quer zur Stapelrichtung erstrecken, die der Transportwagen dann einnimmt, wenn dieser in einen weiteren Transportwagen platzsparend eingeschoben wird.

Zum nächstliegenden Stand der Technik zählt ein für industrielle Zwecke bestimmter, mit gleichen Wagen stapelbarer Transportwagen, der anhand der Figuren 9, 10 und 11 in der US 3, 224,787 gezeigt und näher beschrieben ist. Mit diesem Wagen lassen sich Teile transportieren, die für eine industrielle Fertigung bestimmt und mittels Haken an einer schräg aufragenden Wand befestigbar sind. Fig. 11 der erwähnten Schrift zeigt drei platzsparend abgestellte Transportwagen, wobei beim ersten und beim letzten Wagen dieser Reihe die eben genannten Haken fehlen. Es bietet sich an, jene Wägen, die keine Haken aufweisen, auch zum Transport von Platten in hochkant abgestellter Lage zu nutzen, doch sind diese Wagen viel zu schmal und es besteht die Gefahr, dass Platten nach vorne vom Transportwagen herabrutschen.

Es ist Aufgabe der Erfindung, einen Transportwagen der hier vorliegenden Art so weiterzuentwickeln, dass dieser in der Lage ist, große und kleine Platten hochkant und sicher zu transportieren und dass gleiche Transportwagen bei Nichtgebrauch so eng wie möglich platzsparend ineinandergeschoben, also in einer Reihe gestapelt werden können.

Die Lösung der Aufgabe besteht darin, dass an oder nahe der kürzeren parallelen Seite des Fahrgestelles eine einen Zwischenraum aufweisende Anschlagvorrichtung angeordnet ist, die ein Abrutschen der Platten verhindert, dass sich die Auflageanordnung im Bereich zwischen der Anschlagvorrichtung und der Stützeinrichtung befindet, dass mittig eine Stützstrebe vorgesehen ist, die vom horizontalen Rahmenabschnitt ausgehend nach unten zum Querrahmen verläuft, wobei die Stützstrebe parallel zu den Schenkeln angeordnet ist und dass sich in gestapeltem Zustand zweier Transportwagen die Stützstrebe des vorausbefindlichen Transportwagens zumindest teilweise im Zwischenraum der Anschlagvorrichtung des eingeschobenen Transportwagens befindet.

Die aufgefundene Lösung lässt folgende Vorteile entstehen:
- Es ist eigens eine geeignete Anschlagvorrichtung vorgesehen, so dass zu transportierende Platten nicht nach vorne vom Transportwagen herabrutschen können.
- Zusammen mit den beiden Schenkeln der Stützeinrichtung bildet die mittig angeordnete und parallel zu den Schenkeln verlaufende Stützstrebe drei Anlagestellen für abzustellende große Platten. Die Stützstrebe trägt dazu bei, dass auch kleine Platten sicher transportierbar sind, da dann als Anlagestellen ein Schenkel und die Stützstrebe nutzbar sind.
- Dadurch dass die Anschlagvorrichtung mittig einen Zwischenraum aufweist, können gleiche Transportwagen engstmöglich ineinandergeschoben werden, denn die Stützstrebe eines vorausbefindlichen Transportwagens stößt nicht an die kürzere parallele Seite eines rückwärtigen Transportwagens an, sondern befindet sich im Zwischenraum der Anschlagvorrichtung dieses Transportwagens. Dadurch ist es möglich, das Fahrgestell gleicher Transportwagen so zu gestalten, dass in gestapeltem Zustand zweier Transportwagen in optimaler Weise die kürzere parallele Seite eines rückwärtigen Transportwagens direkt am Querrahmen der vorausbefindlichen Transportwagens anliegt.

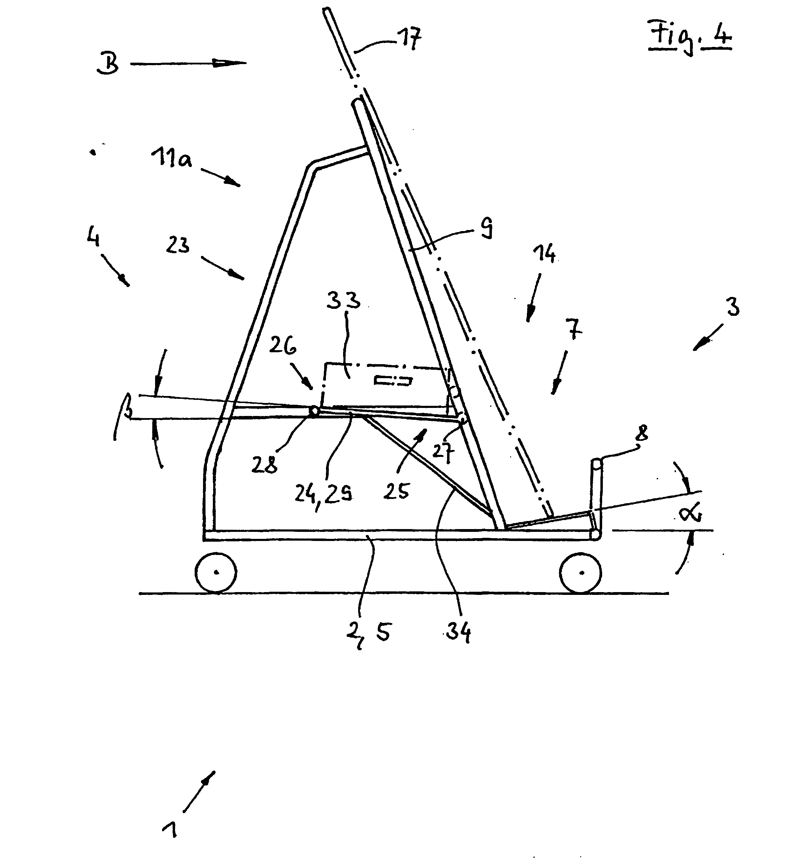

Nun zeigen wohl die Figuren 4 und 5 der genannten US 3,224,787 ausschnittweise eine Ausführungsform eines Transportwagens, bei dem an der kürzeren parallelen Seite des Fahrgestelles zwei mit der Positionszahl 60 gekennzeichnete Klemmplatten vorgesehen sind, mit deren Hilfe und mittels Schrauben die schräg nach oben gerichtete Stützeinrichtung an der kürzeren parallelen Seite befestigt ist. Die Klemmplatten stehen ein kurzes Stück nach oben über die oberen Schrauben hinaus. Die dadurch entstandenen, knapp überstehenden Abschnitte der Klemmplatten eignen sich jedoch nicht als Einrichtung, die ein Abrutschen der Platten nach vorne verhindern könnten. Sie sind weder für eine derartige Funktion vorgesehen, noch ist eine derartige Funktion in der genannten US-Schrift genannt. Ferner fehlt bei diesen Transportwagen jener Querrahmen, der entsprechend den in den Figuren 9, 10 und 11 gezeigten Transportwagen parallel zur kürzeren parallelen Seite des Fahrgestelles verläuft.

Gemäß einer Weiterentwicklung der Erfindung ist es möglich, den Transportwagen zusätzlich mit einer Abstelleinrichtung für nicht plattenförmige Güter auszustatten. Dadurch ist es möglich, in einem einzigen Einkaufsvorgang Platten und andere Güter auf dem Transportwagen abstellen, ohne zweimal mit dem Transportwagen fahren zu müssen.

Die Erfindung wird anhand von Ausführungsbeispielen näher erläutert. Es zeigt
- Fig. 1: einen stapelbaren Transportwagen in räumlicher Darstellung;
- Fig. 2: in einer Draufsicht zwei gestapelte Transportwagen entsprechend Fig. 1 ;
- Fig. 3: einen Transportwagen entsprechend Fig. 1 mit einer Abstelleinrichtung für kleinere Güter sowie
- Fig. 4: den in Fig. 3 gezeigten Transportwagen in Seitenansicht.

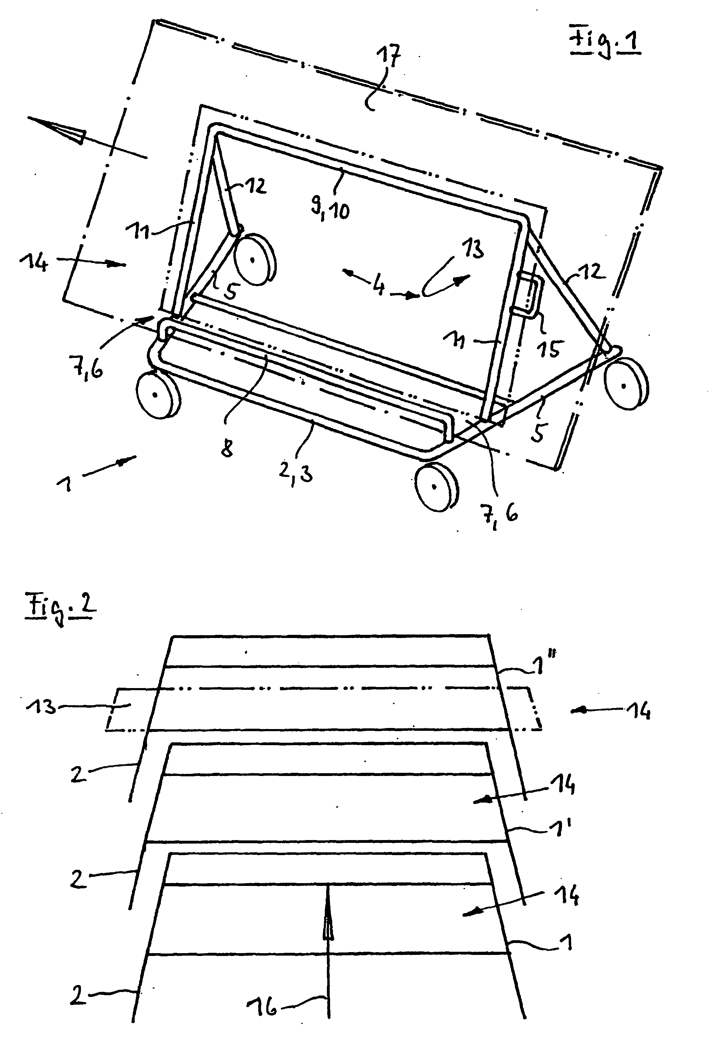

Der in Fig. 1 dargestellte, für den Transport von hochkant abgestellten Platten 17 geeignete Transportwagen 1 weist ein von oben betrachtet trapezförmiges Fahrgestell 2 auf, dessen längere parallele Seite 4 fehlt..Nahe der kürzeren parallelen Seite 3 und innerhalb des Grundrisses des Fahrgestelles 2 erstreckt sich eine Anschlagvorrichtung 8. Im Anschluss an die Anschlagvorrichtung 8 folgt eine Auflageanordnung 7, die durch je einen Abschnitt 6 der beiden konvergierend angeordneten Holme 5 des Fahrgestelles 2 gebildet ist. Danach ist eine Stützeinrichtung 9 vorgesehen, die einen U-förmigen steil schräg nach oben gerichteten Rahmen 10 aufweist, von dessen beiden Schenkeln 11 je eine Stütze 12 zu den freien Enden der Holme 5 gerichtet ist und sich an diesen abstützt. Zum Schieben des Transportwagens 1 im Leerzustand kann an wenigstens einer geeigneten Stelle ein Schiebegriff 15 vorgesehen sein. Einen großen Umriss aufweisend und strichpunktiert dargestellt ist eine Platte 17 eingezeichnet, die sich in der durch die Auflageanordnung 7, durch die Anschlagvorrichtung 8 und durch die Stützeinrichtung 9 gebildeten Aufnahmevorrichtung 14 befindet. Die Platte 17 liegt an der Auflageanordnung 7 auf. Sie liegt ferner mit ihrem unteren horizontalen Rand an der Anschlagvorrichtung 8 an und sie lehnt an der Stützeinrichtung 9. Der eingezeichnete Pfeil zeigt die Schieberichtung des so beladenen Transportwagens 1 an. Einen kleinen Umriss aufweisend und doppelpunktartig gezeichnet ist eine Ebene 13 dargestellt, in der sich die Stützeinrichtung 9 befindet Umgekehrt kann auch gefolgert werden, dass die Ebene 13 durch die Stützeinrichtung 9 gebildet ist. Die von oben betrachtete Ebene 13 erstreckt sich in Längsrichtung (Pfeil) der in der Zeichnung dargestellten Platte 17. Von oben betrachtet ist die Ebene 13 zu den konvergierenden Holmen 5 des Fahrgestelles 2 spiegelbildlich in je einem gleichen Winkel angeordnet. Man kann auch sagen, die Längserstrekkung der Ebene 13 verläuft annähernd quer zu den beiden Holmen 5. Von oben betrachtet stellt sich die Aufnahmeeinrichtung 14 als längliches Gebilde dar.

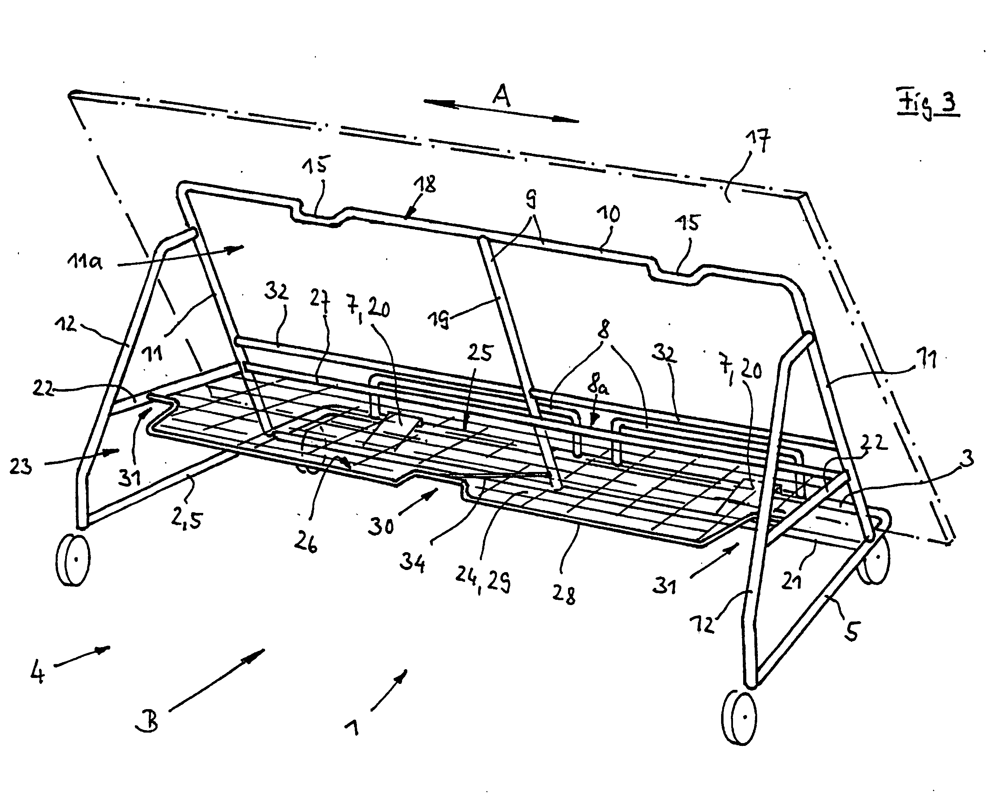

Fig. 2 zeigt in einer Draufsicht drei ineinandergeschobene, also platzsparend gestapelte Transportwagen 1, 1', 1" gemäß Fig. 1. Die trapezförmigen Fahrgestelle 2 sind ineinandergesteckt. Der eingezeichnete, durch die Positionszahl 16 gekennzeichnete Pfeil zeigt jene Richtung an (auch Stapelrichtung), in die ein Transportwagen 1 zu bewegen ist, wenn dieser platzsparend in einen weiteren, vorausbefindlichen Transportwagen 1' eingeschoben, also mit diesem gestapelt wird. Aus der Zeichnung ist deutlich erkennbar, dass sich die länglichen Aufnahmeeinrichtung 14 der einzelnen Transportwagen 1, 1', 1" quer zur Stapelrichtung 16 erstrecken. Die Aufnahmeeinrichtungen 14 sind in Stapelrichtung 16 bzw. in Längsrichtung der Transportwagen 1 betrachtet hintereinander angeordnet. Die Lage der Aufnahmeeinrichtung 14 in Bezug zum Fahrgestell 2 ist bei jedem Transportwagen 1 so gewählt, dass sich in gestapeltem Zustand mehrer Transportwagen 1, 1', 1" die Längsrichtungen der Ebenen 13 der Stützeinrichtungen 9 quer zur Stapelrichtung 16 erstrecken.

Der in Fig. 3 räumlich und in Fig. 4 von der Seite dargestellte Transportwagen 1 ist zusätzlich mit einer Abstelleinrichtung 24 für nicht plattenförmige Gegenstände ausgestattet. Der Transportwagen 1 weist ein von oben betrachtet trapezförmiges, mit Rädern ausgestattetes Fahrgestell 2 auf, dessen längere parallele Seite 4 fehlt. Nahe der kürzeren parallelen Seite 3 und innerhalb des Grundrisses des Fahrgestelles 2 erstreckt sich eine Anschlagvorrichtung 8. Im Anschluss an die Anschlagvorrichtung 8 folgt eine Auflageanordnung 7, die durch zwei leicht ansteigende Auflagestellen 20 gebildet ist. Danach ist eine Stützeinrichtung 9 vorgesehen, die einen U-förmigen, steil schräg nach oben gerichteten Rahmen 10 aufweist, von dessen beiden Schenkeln 11 je eine Stütze 12 zu den freien Enden der Holme 5 des Fahrgestelles 2 gerichtet ist und sich an diesen abstützt. Parallel zu den Schenkeln 11 ist mittig eine Stützstrebe 19 vorgesehen, die vom horizontalen Rahmenabschnitt 18 der Stützeinrichtung 9 nach unten zu einem Querrahmen 21 verläuft, der parallel zur kürzeren parallelen Seite 3 des Fahrgestelles 2 angeordnet ist und die Holme 5 verbindet. In einem Abstand zur Auflageanordnung 7 ist weiter oben je ein Steg 22 vorgesehen. Die Stege 22 verbinden je einen Schenkel 11 mit je einer Stütze 12. In dem durch die Stützen 12 und durch die Rückseite 11a der Stützeinrichtung 9 gebildeten Raum 23 befinden sich eine Abstelleinrichtung 24 zum Abstellen von nicht plattenförmigen Gütern 33. Ein erster horizontal angeordneter Längssteg 27 verbindet die beiden Schenkel 11. Ein weiterer, mit Einschnitten 30, 31 ausgestatteter Längssteg 28 verbindet in einem seitlichen Abstand zum ersten Längssteg 27 die Stege 22. Der weitere Längssteg 28 ist etwas höher angeordnet als der erste Längssteg 27. Zwischen den Längsstegen 27, 28 befindet sich ein Gitterboden 29, der wie die Längsstege 27, 28 zur Abstelleinrichtung 24 gehört und auf dem sich die nichtplattenförmigen Güter 33 abstellen lassen. Der Gitterboden 29 und damit die Stellfläche der Abstelleinrichtung 24 ist bevorzugt zur Auflageanordnung 7 hin geneigt angeordnet. Er kann aber auch horizontal angeordnet sein, sofern er in dieser Lage den Stapelvorgang zweier gleicher Transportwagen 1 nicht behindert. Gegenüber der Stützstrebe 19 ist der Längssteg 28 mit einem zur Stützstrebe 19 gerichteten Einschnitt 30 versehen. Je ein weiterer zu den Schenkeln 11 weisender Einschnitt 31 befindet sich jeweils einem Schenkel 11 gegenüber. Beim platzsparenden Ineinanderschieben zweier gleicher Transportwagen 1, bei dem auf die Zeichnung bezogen von linker Seite aus ein Transportwagen 1 in den vorausbefindlichen und hier dargestellten Transportwagen 1 eingeschoben wird, befinden sich die Schenkel 11 der Stützeinrichtung 9 des eingeschobenen Transportwagens 1 in den Einschnitten 31 der Abstelleinrichtung 24 des vorausbefindlichen Transportwagens 1. Ferner befindet sich die Stützstrebe 19 des eingeschobenen Transportwagens 1 im mittig angeordneten Einschnitt 30 des vorausbefindlichen Transportwagens 1. Dadurch lassen sich zwei Transportwagen 1 enger stapeln. Oberhalb des ersten Längssteges 27 sind zwei kurze Längsstege 32 vorgesehen, welche jeweils einen Schenkel 11 mit der Stützstrebe 19 verbinden und einen Anschlag für auf der gewöhnlich geneigten Abstelleinrichtung 24 abgestellte Güter 33 bilden. Im eineinandergeschobenem Zustand zweier Transportwagen 1 befinden sich bei geneigten Abstelleinrichtungen 24 der vordere Abschnitt 25 der Abstelleinrichtung 24 des eingeschobenen Transportwagens 1 unterhalb des hinteren Abschnittes 26 der Abstelleinrichtung 24 des vorausbefindlichen Transportwagens 1, während die Fahrgestelle 2 in bekannter Weise als offene Trapeze ineinandergeschachtelt sind. Der Rahmenabschnitt 18 der Stützeinrichtung 9 kann mit wenigstens einem Schiebegriff 15 ausgestattet sein, der durch Kröpfung des Rahmenabschnittes 18 nach hinten gebildet ist und der einen Greifbereich zwischen sich und einer Platte 17 bildet.
Ergänzend zeigt Fig. 4 den Transportwagen 1 von der Seite. Man erkennt die horizontal angeordneten, konvergierenden Holme 5 des Fahrgestelles 2, von denen in der Zeichnung rechts, also im vorderen Bereich des Transportwagens 1 sich die Anschlagvorrichtung 8 nach oben erstreckt. Ihr folgt die nach vorne leicht ansteigende Auflageanordnung 7. An diese schließt die steil schräg nach oben sich erstreckende Stützeinrichtung 9 an, an der eine Platte 17 lehnt, die auf der Auflageanordnung 7 abgestellt ist. Deutlich ist auch der Raum 23 zu erkennen, in dem sich die Abstelleinrichtung 24 befindet. Der Winkel α zeigt, dass die Auflageanordnung 7 nach vorne leicht ansteigt, während der Winkel β die nach vorne leicht abfallende Lage der Abstelleinrichtung 24 wiedergibt. Die Abstelleinrichtung 24 ist neben der durch die Anschlagvorrichtung 8, die Auflageanordnung 7 und durch die Stützeinrichtung 9 gebildeten Aufnahmeeinrichtung 14 angeordnet. Es können auch zwei nebeneinander oder zwei übereinander angeordnete Abstelleinrichtungen 24 vorgesehen sein. Die wenigstens eine Abstelleinrichtung 24 verläuft in ihrer Längserstreckung parallel zur Aufnahmeeinrichtung 14 und erstreckt sich quer zur Stapelrichtung, die der Transportwagen 1 dann einnimmt, wenn dieser in einen gleichen Transportwagen 1 eingeschoben wird. Die Abstelleinrichtung 24 ist höher angeordnet als die Auflageanordnung 7. Die Abstelleinrichtung 24 kann mittig durch eine Verstrebung 34 zusätzlich gestützt sein. In gestapeltem Zustand zweier Transportwagen 1 befinden sich die Stützstrebe 19 und die Verstrebung 34 eines vorausbefindlichen Transportwagens 1 zumindest teilweise in einem Zwischenraum 8a der Anschlagvorrichtung 8 des eingeschobenen Transportwagens 1, vgl. Fig. 1. Gleiche Transportwagen 1 lassen sich, ohne dies zeichnerisch extra darzustellen, deshalb platzsparend eineinanderschieben, weil die Fahrgestelle 2 konisch und die Stützen 12 nach außen gerichtet sind, weil ferner die Einschnitte 30, 31 und der Zwischenraum 8a vorgesehen sind und weil schließlich die Abstelleinrichtung 24 nach vorne abfallend angeordnet ist. Leere oder mit Platten 17 und Gütern 33 beladene Transportwagen 1 werden in Längsrichtung geschoben oder gezogen (Pfeil A) und unbeladen quer zur Längsrichtung platzsparend gestapelt (Pfeil B).

Es soll abschließend nicht unerwähnt bleiben, dass die Aussage "quer zur Stapelrichtung" nicht exakt im Sinne eines 90°-Winkels verstanden werden darf. Je nach Ausbildung des Fahrgestelles 2 oder der Lage der Aufnahmeeinrichtung 14 bezogen auf das Fahrgestell 2 können Anordnungen entstehen, die von einem rechten Winkel weniger als 45° abweichen. Auch diese Anordnungen werden durch das Wort "quer" erfasst.

## Patentansprüche

1. Stapelbarer Transportwagen (1) zum Transport von Platten (17) in hochkant abgestellter Lage, mit einem von oben betrachtet trapezförmigen Fahrgestell (2), dessen längere parallele Seite (4) fehlt, mit einem Querrahmen (21), der parallel zur kürzeren parallelen Seite (2) des Fahrgestelles (2) angeordnet ist und die seitlichen Holme (5) des Fahrgestelles (2) verbindet, mit einer am Fahrgestell (2) angeordneten Auflageanordnung (7) zum Abstellen der Platten (17) und mit einer vom Fahrgestell (2) getragenen, schräg nach oben gerichteten, zwei Schenkel (11) und einen horizontalen Rahmenabschnitt (18) aufweisenden Stützeinrichtung (9) zum Anlehnen der Platten (17), wobei sich die abgestellten Platten (17) quer zur Stapelrichtung erstrecken, die der Transportwagen (1) dann einnimmt, wenn dieser in einen weiteren Transportwagen (1) platzsparend eingeschoben wird, **dadurch gekennzeichnet, dass** an oder nahe der kürzeren parallelen Seite (3) des Fahrgestelles (2) eine einen Zwischenraum (8a) aufweisende Anschlagvorrichtung (8) angeordnet ist, die ein Abrutschen der Platten (17) verhindert, dass sich die Auflageanordnung (7) im Bereich zwischen der Anschlagvorrichtung (8) und der Stützeinrichtung (9) befindet, dass mittig eine Stützstrebe (19) vorgesehen ist, die vom horizontalen Rahmenabschnitt (18) ausgehend nach unten zum Querrahmen (21) verläuft, wobei die Stützstrebe (19) parallel zu den Schenkeln (11) angeordnet ist und dass sich in gestapeltem Zustand zweier Transportwagen (1) die Stützstrebe (19) des vorausbefindlichen Transportwagens (1) zumindest teilweise im Zwischenraum (8a) der Anschlagvorrichtung (8) des eingeschobenen Transportwagens (1) befindet.

2. Stapelbarer Transportwagen nach Anspruch 1, **dadurch gekennzeichnet, dass** neben der Aufnahmeeinrichtung (14) wenigstens eine Abstelleinrichtung (24) für nicht plattenförmige Güter (33) vorgesehen ist.

3. Stapelbarer Transportwagen nach Anspruch 1 oder 2, **dadurch gekennzeichnet, dass** die Auflageanordnung (7) durch je einen Abschnitt (6) der beiden konvergierend angeordneten Holme (5) des Fahrgestelles (2) gebildet ist.

4. Stapelbarer Transportwagen nach einem der Ansprüche 1 bis 3, **dadurch gekennzeichnet, dass** die Auflageanordnung (7) durch zwei leicht ansteigende Auflagestellen (20) gebildet ist, die im Bereich zwischen der Anschlagvorrichtung (8) und der Stützeinrichtung (9) angeordnet sind.

5. Stapelbarer Transportwagen nach einem der Ansprüche 2 bis 4, **dadurch gekennzeichnet, dass** die wenigstens eine Abstelleinrichtung (24) höher angeordnet ist als die Auflageanordnung (7).

6. Stapelbarer Transportwagen nach einem der Ansprüche 2 bis 5, **dadurch gekennzeichnet, dass** die wenigstens eine Abstelleinrichtung (24) in Richtung zur Auflageanordnung (7) hin leicht geneigt angeordnet ist.

7. Stapelbarer Transportwagen nach einem der Ansprüche 2 bis 6, **dadurch gekennzeichnet, dass** sich die wenigstens eine Abstelleinrichtung (24) an der Rückseite (11a) der Stützeinrichtung (9) befindet.

8. Stapelbarer Transportwagen nach einem der Ansprüche 2 bis 7, **dadurch gekennzeichnet, dass** sich die wenigstens eine Abstelleinrichtung (24) quer zur Stapelrichtung des Transportwagens (1) erstreckt.

9. Stapelbarer Transportwagen nach einem der Ansprüche 2 bis 8, **dadurch gekennzeichnet, dass** an der wenigstens einen Abstelleinrichtung (24) nach vorne gerichtete, den Stapelvorgang zweier Transportwagen (1) begünstigende Einschnitte (31) oder (30, 31) vorgesehen sind.

10. Stapelbarer Transportwagen nach einem der Ansprüche 2 bis 9, **dadurch gekennzeichnet, dass** die wenigstens eine Abstelleinrichtung (24) zu beiden Längsseiten durch einen ersten Längssteg (27) und durch einen weiteren Längssteg (28) begrenzt ist.

11. Stapelbarer Transportwagen nach Anspruch 10, **dadurch gekennzeichnet, dass** der weitere Längssteg (28) an Stegen (22) befestigt ist, welche zur Stützeinrichtung (9) gehörende Schenkel (11) sowie Stützen (12) verbinden, die von der Stützeinrichtung (9) wegführen.

12. Stapelbarer Transportwagen nach einem der Ansprüche 2 bis 11, **dadurch gekennzeichnet, dass** die wenigstens eine Abstelleinrichtung (24) einen Gitterboden (29) aufweist.

13. Stapelbarer Transportwagen nach einem der Ansprüche 2 bis 12, **dadurch gekennzeichnet, dass** in gestapeltem Zustand zweier Transportwagen (1) deren Abstelleinrichtungen (24) gegeneinander versetzt und teilweise übereinander angeordnet sind.

## Claims

1. A nestable trolley (1) for the transportation of panels (17) in an upright position, comprising a wheel frame (2) which is trapezoidal when viewed from above and the longer parallel side (4) of which has been omitted, a transverse frame (21) arranged parallel to the shorter parallel side (3) of the wheel frame (2) and connecting the side bars (5) of the wheel frame (2), a bearing arrangement (7) arranged on the wheel frame (2) and on which the panels (17) may be deposited, and a supporting arrangement (9) which is carried by the wheel frame (2), extends obliquely upwards, has two arms (11) and a horizontal frame portion (18) and against which the panels (17) may be leaned, wherein the deposited panels (17) extend transversely to the nesting direction of the trolley (1) when it is pushed into another trolley (1) in a space-saving manner, **characterised in that** a stop device (8) having a gap (8a) is arranged on or near the shorter parallel side (3) of the wheel frame (2) and prevents the panels (17) from slipping off, **in that** the bearing arrangement (7) is located in the region between the stop device (8) and the supporting arrangement (9), **in that** a supporting strut (19) is centrally provided and, starting from the horizontal frame portion (18), extends downwards to the transverse frame (21), the supporting strut (19) being arranged parallel to the arms (11), and **in that**, when two trolleys (1) have been nested, the supporting strut ( 19) of the preceding trolley (1) is at least partly located in the gap (8a) of the stop device (8) of the trolley (1) which has been pushed in.

2. A nestable trolley according to claim 1, **characterised in that** at least one shelf arrangement (24) for non-panel-type goods (33) is provided in addition to the holding arrangement (14).

3. A nestable trolley according to claim 1 or 2, **characterised in that** the bearing arrangement (7) is formed by a portion (6) of each of the two converging side bars (5) of the wheel frame (2).

4. A nestable trolley according to any one of claims 1 to 3, **characterised in that** the bearing arrangement (7) is formed by two slightly inclined bearing points (20) arranged in the region between the stop device (8) and the supporting arrangement (9).

5. A nestable trolley according to any one of claims 2 to 4, **characterised in that** the at least one shelf arrangement (24) is arranged higher than the bearing arrangement (7).

6. A nestable trolley according to any one of claims 2 to 5, **characterised in that** the at least one shelf arrangement (24) is slightly inclined towards the bearing arrangement (7).

7. A nestable trolley according to any one of claims 2 to 6, **characterised in that** the at least one shelf arrangement (24) is located at the rear (11a) of the supporting arrangement (9).

8. A nestable trolley according to any one of claims 2 to 7, **characterised in that** the at least one shelf arrangement (24) extends transversely to the nesting direction of the trolley (1).

9. A nestable trolley according to any one of claims 2 to 8, **characterised in that** recesses (31) or (30, 31), extending forwards and assisting the process of nesting two trolleys (1), are provided on the at least one shelf arrangement (24).

10. A nestable trolley according to any one of claims 2 to 9, **characterised in that** the at least one shelf arrangement (24) is bounded on the two longitudinal sides by a first longitudinal rod (27) and by a second longitudinal rod (28).

11. A nestable trolley according to claim 10, **characterised in that** the second longitudinal rod (28) is fixed to rods (22) which connect arms (11) forming part of the supporting arrangement (9) and supports (12) leading away from the supporting arrangement (9).

12. A nestable trolley according to any one of claims 2 to 11, **characterised in that** the at least one shelf arrangement (24) has a lattice base (29).

13. A nestable trolley according to any one of claims 2 to 12, **characterised in that**, when two trolleys (1) have been nested, their shelf arrangements (24) are staggered and arranged partially one above the other.

## Revendications

1. Chariot de transport (1) empilable destiné au transport de plaques (17) en position de dépôt verticale, avec un châssis (2) en forme de trapèze vu de dessus dont le côté parallèle long (4) manque, avec un châssis transversal (21) qui est disposé parallèlement au petit côté parallèle (3) du châssis (2) et qui relie les montants latéraux (5) du châssis (2), avec un dispositif d'appui (7) disposé sur le châssis (2) pour y déposer les plaques (17) et avec un dispositif de soutien 9 supporté par le châssis (2) présentant deux montants (11) dirigés de manière inclinée vers le haut et une section horizontale (18) du châssis pour y appuyer les plaques (17), les plaques (17) déposées s'étendant perpendiculairement à la direction d'empilage que le chariot de transport (1) adopte lorsqu'on l'insère dans un autre chariot de transport (1) pour gagner de la place, **caractérisé en ce qu'**un dispositif de butée (8) présentant un intervalle (8a) est disposé au ou à côté du petit côté parallèle (3) du châssis (2), lequel dispositif empêche les plaques (17) de glisser, **en ce que** le dispositif d'appui (7) se situe dans la zone entre le dispositif de butée (8) et le dispositif de soutien (9), **en ce qu'**un montant de soutien (19) qui s'étend depuis la section horizontale du châssis (18) vers le bas en direction du châssis transversal (21) est prévu au milieu, le montant de soutien (19) étant disposé parallèlement aux montants (11), et **en ce qu'**en l'état empilé de deux chariots de transport (1), le montant de soutien (19) du chariot de transport (1) qui se trouve à l'avant se trouve au moins en partie dans l'intervalle (8a) du dispositif de butée (8) du chariot de transport inséré (1).

2. Chariot de transport empilable selon la revendication 1, **caractérisé en ce qu'**au moins un dispositif de dépôt (24) pour des marchandises (33) qui n'ont pas la forme de plaques est prévu à côté du dispositif de réception (14).

3. Chariot de transport empilable selon la revendication 1 ou 2, **caractérisé en ce que** le dispositif d'appui (7) est formé par une section (6) de chacun des montants (5) du châssis (2) disposés de manière convergente.

4. Chariot de transport empilable selon l'une quelconque des revendications 1 à 3, **caractérisé en ce que** le dispositif d'appui (7) est formé par deux emplacements de support (20) légèrement remontants qui sont disposés dans la zone entre le dispositif de butée (8) et le dispositif de soutien (9).

5. Chariot de transport empilable selon l'une quelconque des revendications 2 à 4, **caractérisé en ce que** le dispositif de dépôt (24) au moins au nombre de un est situé plus haut que le dispositif d'appui (7).

6. Chariot de transport empilable selon l'une quelconque des revendications 2 à 5, **caractérisé en ce que** le dispositif de dépôt (24) au moins au nombre de un est légèrement incliné en direction du dispositif d'appui (7).

7. Chariot de transport empilable selon l'une quelconque des revendications 2 à 6, **caractérisé en ce que** le dispositif de dépôt (24) au moins au nombre de un se trouve sur le côté arrière (1 1a) du dispositif de soutien (9).

8. Chariot de transport empilable selon l'une quelconque des revendications 2 à 7, **caractérisé en ce que** le dispositif de dépôt (24) au moins au nombre de un s'étend transversalement à la direction d'empilage du chariot de transport (1).

9. Chariot de transport empilable selon l'une quelconque des revendications 2 à 8, **caractérisé en ce que** deux encoches (31) ou (30, 31) orientées vers l'avant et favorisant le processus d'empilage de deux chariots de transport (1) sont prévues sur le dispositif de dépôt (24) au moins au nombre de un.

10. Chariot de transport empilable selon l'une quelconque des revendications 2 à 9, **caractérisé en ce que** le dispositif de dépôt (24) au moins au nombre de un est délimité sur ses deux côtés longitudinaux par une première traverse longitudinale (27) et par une autre traverse longitudinale (28).

11. Chariot de transport empilable selon la revendication 10, **caractérisé en ce que** l'autre traverse longitudinale (28) est fixée sur des traverses (22) qui relient des montants (11) du dispositif de soutien (9) et des bras de support (12) qui partent du dispositif de soutien (9).

12. Chariot de transport empilable selon l'une quelconque des revendications 2 à 11, **caractérisé en ce que** le dispositif de dépôt (24) au moins au nombre de un présente un plateau en grille (29).

13. Chariot de transport empilable selon l'une quelconque des revendications 2 à 12, **caractérisé en ce qu'**en l'état empilé de deux chariots de transport (1), leurs dispositifs de dépôt (24) sont décalés l'un par rapport à l'autre et sont disposés en partie l'un par-dessus l'autre.
